# EUROPEAN PATENT SPECIFICATION

(11) **EP 0 357 154 B1**
(45) Date of publication and mention of the grant of the patent: **03.02.1993**
(21) Application number: 89202218.7
(22) Date of filing: 31.08.1989
(51) Int. Cl.: A01M 7/00, B05B 1/16, B05B 1/20

(54) **A device for spraying liquids**
Vorrichtung zum Sprühen von Flüssigkeiten
Dispositif de pulvérisation de liquides

(30) Priority: 31.08.1988 NL 8802152
(43) Date of publication of application: 07.03.1990
(73) Proprietor: Multinorm B.V., NL-2150 BA Nieuw-Vennep (NL)
(72) Inventor: Van Steijn, Aloijsius Christianus Maria, Sassenheim (NL)
(74) Representative: Hoorweg, Petrus Nicolaas

(56) References cited:
- EP-A- 0 154 592
- AU-B- 493 523
- DE-A- 3 537 082
- FR-A- 2 316 856
- FR-A- 2 476 506
- FR-A- 2 558 922
- US-A- 2 857 201
- Landtechnik und Pflanzenbau, vol.42, no.11, Nov. 1987, (lehrte, DE), pages 461-464, B. Göbel.

## Description

The invention relates to a device for spraying liquids such as fertilizer or pesticides/herbicides dissolved in a liquid carrier, which device is provided with an elongate frame carried by a vehicle, which frame extends transversely of the movement of forward direction, and with groups of spray nozzles carried by said frame which are connected to a feed line, wherein said feed line is fed by a pressure pump for the liquid to be sprayed and is connected to a feed channel terminating at a distance from a partition wall arranged in a valve housing and provided with a passage opening, whereas a valve body is active in said valve housing for closing off of said passage opening in said partition wall.

With a known device of the type described in "Landtechnik und Pflanzenbau", vol. 42, no. 11, November 1987, pages 461 to 464, B. Göbel: "Pflanzenschutzgeräte", Teil 1, it is possible to control the supply of liquid to the spray nozzles.

The invention has for its object to improve said control system for controlling the supply of liquid to avoid overloading the nozzles, which control takes place through a device provided with an adjustable throttle valve and check valve.

The device according to the invention is distinguished in that said valve body is lengthened by a tongue extending into said feed channel, whereas the end of the feed channel is narrowed in respect of said passage and the tongue is narrowed along a portion between the valve body and the end piece of the tongue.

The invention will be further elucidated in the figure description below of an embodiment.

In the drawing:
fig. 1 shows a perspective rear view of a vehicle in the form of an agricultural tractor provided with a device according to the invention;
fig. 2 shows a part of a spray boom from fig. 1 with the rotatable shaft and carriers according to the invention mounted thereon;
fig. 3 shows a schematic view of the control system for the supply of liquid to the spray nozzles; fig. 4 shows a lengthwise section of a device with an improved valve system according to the invention.

The spray device according to the invention consists of an elongate frame 1 in the form of a framework of pipes or other appropriate profiles, which frame is attached in the middle at 2 to a coupling device for couling onto an agricultural tractor 3. The agricultural tractor is also provided with a storage tank 4 for the liquid to be sprayed.

Arranged adjacent to each other on the underside of the frame 1 are a number of spray nozzles 5, the embodying of which will be further elucidated below. For the sake of completeness it should be stated that the frame 1 is divided into sections in order to be able to fold these up to obtain the road transportation position of the device. Arranged under each section are joint feed pipes 6 which are in mutual connection via a flexible portion 7. Alternatively it is also possible to supply the sections with liquid separately such that these can be separately controlled.

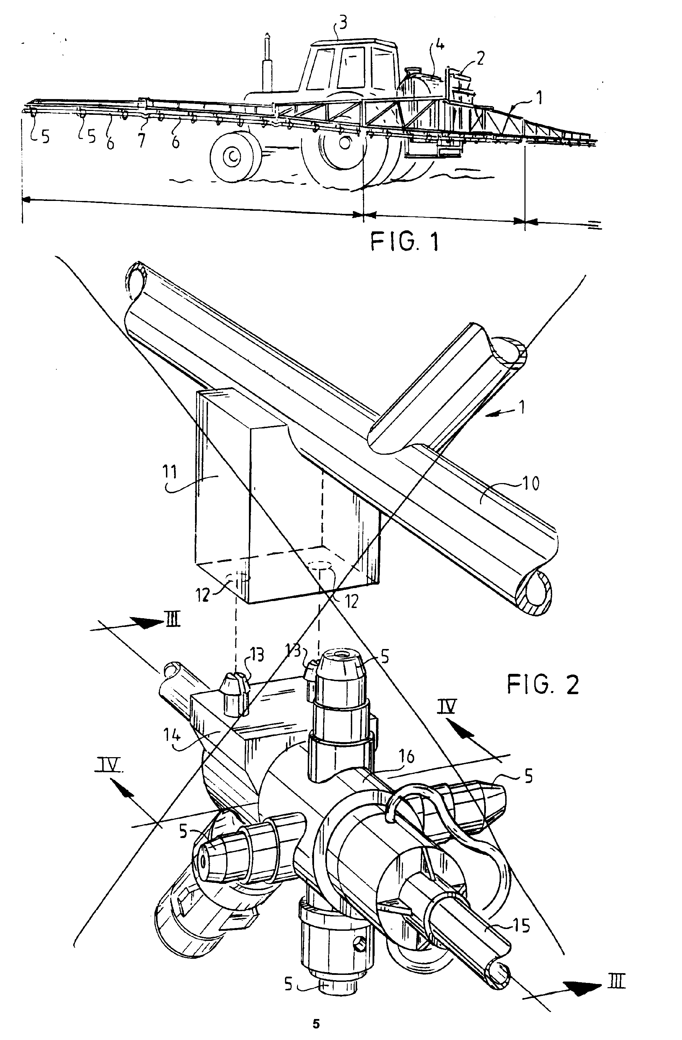

Fig. 2 shows that through the use of a single motor 50 which can cause the hollow pipe 15 to rotate via a transmission 51 the carriers 16 can be simultaneously rotated with the spray nozzles 5 of a section, whereby the spray nozzles 5 of a particular type can be simultaneously placed in communication with the feed channel in the pipe 15. The pipe 15 can be provided with liquid by the liquid pump via a flexible hose 52.

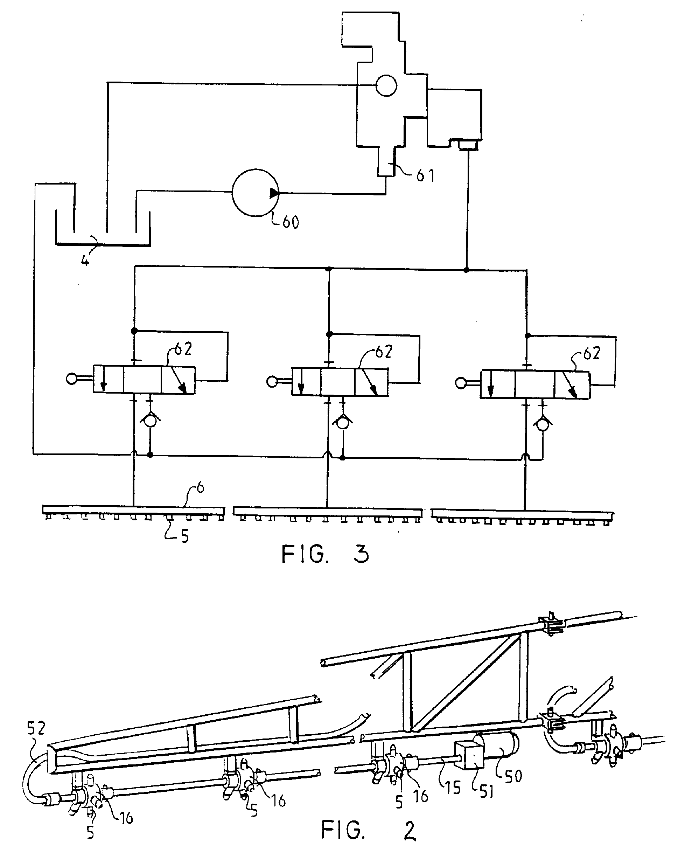

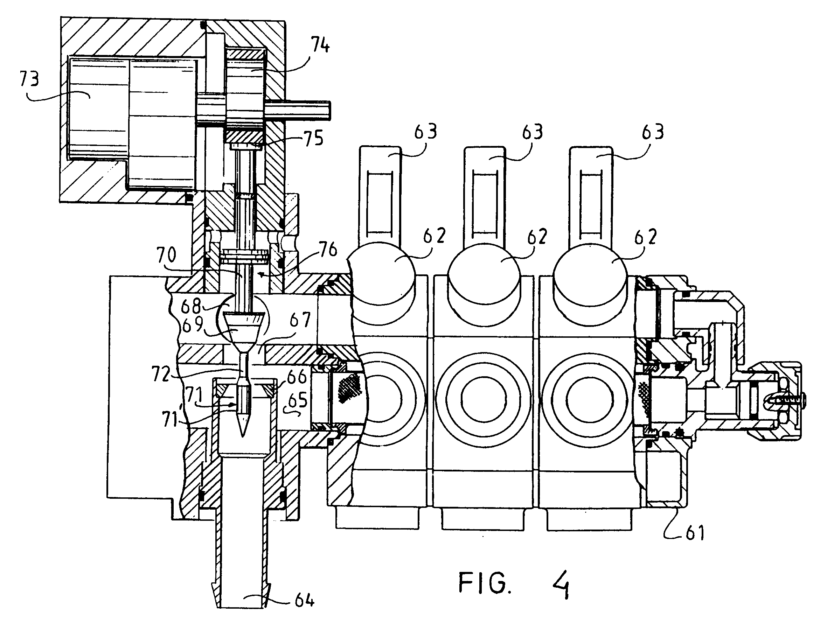

Shown in fig. 3 and 4 are a schematic view in respect of the control system for supplying the liquid to be sprayed and a section through the improved valve embodiment thereof.

Fig. 3 shows that a suction line leads from the storage tank 4 to the pump 60 which pumps oil to a valve housing 61 which is further elucidated below with reference to fig. 8. The valve housing ensures that oil at a determined pressure and quantity is carried to three three-way valves 62 whereby each valve is separately adjustable such that each section of the group of spray nozzles 5 is provided with liquid. Each section can be closed off with the valve 62, see the drawn position in fig. 3, or subsequently be provided with liquid when an increase of the pressure in the feed line for the valve causes it to open automatically for a direct feed-back to the storage tank 4, whereby overloading is avoided.

In fig. 4 the valve system is shown as one whole whereby the valves 62 are disposed adjacent to each other in the same housing, which valves can be operated separately by a handgrip 63. The housing 61 is provided with an inlet stump 64 which is connected to the feed line from the pump 60. The inlet stump runs out into an intake channel 65 in the housing 61, this such that the inlet stump 64 protrudes into this channel whereby the free end thereof is narrowed in respect of passage by means of a ring 66. Arranged directly opposite the debouching of the inlet stump 64 in a partition wall of the housing is a passage opening 67 which leads to the return channel 68 in the housing 61.

The passage opening 67 can be closed by means of a valve body 69 which is fixed to a valve rod 70 which is lengthened on the underside of the valve 69 with a tongue-shaped extension piece 71. The tongue has a thickened portion 71′ which is connected to the valve 69 via a narrowed portion 72. The length of the narrowed portion is such that in the position whereby the valve 69 closes off the opening 67 the narrowed portion is located at the height of the ring 66. In the completely opened position of the valve 69 the thickened portion 71′ enters the narrowed passage of the ring 66.

Closing and opening of the valve occurs by moving the rod 70 up and down by means of a step-motor 73 with eccentric driving 74. The eccentric cam 74 strikes against a stamp member 75 of the valve rod 70 and presses the rod 70 downward, taking with it the valve 69 and tongue 71. The resetting force of the valves comes about by means of a piston cylinder system 76 which exerts an upward-directed force under the influence of the pressure of the liquid in the housing 61.

The valve system according to fig. 4 operates as follows. When a determined amount of liquid is fed under pressure into the inlet stump 64 the liquid will, in the case of an initially closed opening 67, fill the channel 65 and be carried to the spray nozzle sections via the control valves 62. This is carried out under maximum supply conditions of the liquid because the opening 67 is completely closed off. Loss of flow does not occur around the ring 66 because of the narrowed portion 72 therein. If a section has to be closed off a valve 62 is switched over into the locking position which would result in an excessive quantity of liquid being supplied in the lines to the spray nozzle sections. Through adjusting of the step-motor 73 and the ensuing rotation of the eccentric 74 the rod 70 and the valve 69 can be raised slightly from the seat of the opening 67, resulting in a loss of flow of liquid occurring via opening 67, which flow is carried back to the tank via a return line 68. In this way a determined quantity of liquid can be discharged via the opening 67 while a determined pressure is maintained without that liquid being carried to the spray nozzle sections.

Should it be required that spraying be temporarily halted over all sections, then the step-motor 73 need only be rotated so far that the piston rod 70 is turned into the position shown in fig. 4, with the result that the valve 69 is completely raised from the opening 67, the thickened portion 71′ of the tongue 71 is carried into the annular opening of the ring 66, thus creating a venturi effect which ensures that the quantity of liquid is sprayed directly into the return line 68 via opening 67. The venturi effect also results in a lessening of pressure in the channel 65, with the consequence that the supply of liquid to the spray nozzle sections is immediately stopped. On the resumption of spraying the step-motor 73 is again set in the predetermined position with the result that, depending on de number of spray nozzle sections set, the correct position of the valve 69 on the opening 67 is defined. The original position of the valve 69 is hereby adjusted once again and the spraying of the liquid via the spray nozzle sections can be performed in the position already set.

The invention is not limited to the above described embodiments.

## Claims

1. Device for spraying liquids such as fertilizer or pesticides/herbicides dissolved in a liquid carrier (4), which device is provided with an elongate frame (1) carried by a vehicle (3), which frame (1) extends transversely of the movement of forward direction of the vehicle (3), and with groups of spray nozzles (5) carried by said frame (1) which are connected to a feed line (52), wherein said feed line (52) is fed by a pressure pump (60) for the liquid to be sprayed and is connected to a feed channel (64) terminating at a distance from a partition wall arranged in a valve housing (61) and provided with a passage opening (67), whereas a valve body (69) is active in said valve housing (61) for closing off of said passage opening (67) in said partition wall, **characterized in that** said valve body (69) is lengthened by a tongue (71) extending into said feed channel (64), whereas the end of the feed channel (64) is narrowed (66) in respect of said passage (67) and the tongue (71) is narrowed along a portion (72) between the valve body (69) and the end piece (71′) of the tongue.

## Patentansprüche

1. Vorrichtung zum Sprühen von Flüssigkeiten, wie beispielsweise in einem flüssigen Träger (4) gelöste Düngemittel oder Pestizide/Herbizide, wobei die Vorrichtung mit einem von einem Fahrzeug (3) getragenen länglichen Rahmen (1) versehen ist, der sich zur Bewegung des Fahrzeuges (3) in Vorwärtsrichtung quer erstreckt und mit Gruppen durch den Rahmen (1) getragener Sprühdüsen (5), die mit einer Zufuhrleitung (52) verbunden sind, wobei die Zufuhrleitung (52) durch eine Druckpumpe (60) für die zu versprühende Flüssigkeit versorgt wird und mit einem Zufuhrkanal (64) verbunden ist, der in einem Abstand von einer Trennwand endet, die in einem Ventilgehäuse (61) angeordnet und mit einer Durchgangsöffnung (67) versehen ist, während ein Ventilkörper (69) in dem Ventilgehäuse (61) zum Abschließen der Durchgangsöffnung (67) in der Trennwand aktiv ist,
dadurch gekennzeichnet, daß der Ventilkörper (69) durch eine Zunge (71) verlängert ist, die sich in den Zufuhrkanal (64) erstreckt, während das Ende des Zufuhrkanales (64) bezüglich des Durchlasses (67) verjüngt ist und die Zunge (71) längs eines Abschnittes (72) zwischen dem Ventilkörper (69) und dem Endstück (71′) der Zunge verengt ist.

## Revendications

1. Dispositif pour pulvériser des liquides tels que des engrais ou des pesticides/désherbants dissous dans une substance liquide (4), lequel dispositif est pourvu d'un châssis allongé (1) supporté par un véhicule (3) lequel châssis (1) s'étend dans un sens transversal par rapport au mouvement d'avance du véhicule (3), et est pourvu de groupes de buses de pulvérisation (5), supportées par ledit châssis (1), qui sont reliés à une conduite d'alimentation (52), selon lequel ladite conduite d'alimentation (52) est alimentée en liquide à pulvériser par une pompe refoulante (60) et est reliée à un canal d'alimentation (64) se terminant à une distance d'une paroi de séparation prévue dans une soupape (61) et pourvue d'une ouverture de passage (67), un clapet (69) étant actif dans ladite soupape (61) pour fermer ladite ouverture de passage (67) dans ladite paroi de séparation, caractérisé en ce que ledit clapet (69) est rallongé par une barrette (71) s'étendant dans ledit canal d'alimentation (64), l'extrémité du canal d'alimentation (64) étant rétrécie (66) par rapport audit passage (67) et la barrette (71) étant rétrécie sur une partie (72) comprise entre le clapet (69) et la pièce d'extrémité (71′) de la barrette.
